# EUROPÄISCHE PATENTSCHRIFT

(11) **EP 0 915 890 B1**
(45) Veröffentlichungstag und Bekanntmachung des Hinweises auf die Patenterteilung: **01.03.2000**
(21) Anmeldenummer: 97938829.5
(22) Anmeldetag: 17.07.1997
(51) Int. Cl.: C07F 7/04, C07F 7/18

(54) **VERFAHREN ZUR HERSTELLUNG VON ALKOXYSILANEN**
METHOD OF PREPARING ALKOXY SILANES
PROCEDE DE PREPARATION D'ALCOXYSILANES

(30) Priorität: 23.07.1996 DE 19629760
(43) Veröffentlichungstag der Anmeldung: 19.05.1999
(73) Patentinhaber: Wacker-Chemie GmbH, 81737 München (DE)
(72) Erfinder: WEIDNER, Richard, D-84489 Burghausen (DE); BLUEML, Walter, D-84359 Simbach (DE)
(74) Vertreter: Budczinski, Angelika
(86) Internationale Anmeldenummer: EP9703837
(87) Internationale Veröffentlichungsnummer: WO9803514

(56) Entgegenhaltungen:
- WO-A-93/16085
- DE-A- 4 040 679
- GB-A- 941 291
- US-A- 2 643 263
- CHEMICAL ABSTRACTS, vol. 82, no. 1, 6.Januar 1975 Columbus, Ohio, US; abstract no. 4347, BRAININ, L.B. ET AL.: "synthesis of hydroxy(polyethyleneoxy)silanes" XP002043254 & ZH. PRIKL. KHIM. (LENINGRAD), 1974, Seiten 1807-1809,

## Beschreibung

Die Erfindung betrifft ein Verfahren zur Herstellung von Alkoxysilanen durch Umesterung von Alkoxysilanen mit 1 bis 4 Kohlenstoffatomen aufweisenden Alkoxyresten mit höheren Alkoholen in Anwesenheit von sauren oder basischen Katalysatoren unter reduziertem Druck.

In US-A 2,643,263 (California Research Co.; ausgegeben am 23. Juni 1953) werden Tetraalkoxysilane, die u.a. durch Umsetzung von Siliciumtetrachlorid mit verzweigten Alkoholen mit 6 bis 18 Kohlenstoffatomen hergestellt werden, beschrieben. Die Herstellung ausgehend von Siliciumtetrachlorid hat den Nachteil, daß die erhaltenen Produkte ohne weitere aufwendige Nachbehandlung eine hohe Acidität aufweisen, die bei Lagerung zu unerwünschter Hydrolyse der Produkte führt.

In WO 93/16085 (Henkel KGaA; ausgegeben am 19. August 1993) wird ein Verfahren zur Herstellung von hellfarbigen Tetraalkoxysilanen offenbart, wobei in einem 1. Schritt Tetramethoxy- oder ethoxysilane mit primären höheren Alkoholen in Gegenwart basischer Katalysatoren umgeestert werden und in einem nachfolgenden Schritt eine Neutralisation und Bleichung mittels fester saurer Bleicherden und Kationenaustauschern erfolgt. Der 2. Schritt, der vorzugsweise 1 bis 2 Stunden dauert, ist bei diesem Verfahren notwendig, da beim 1. Schritt bedingt durch die Verfahrensweise dunkelgefärbte Tetraalkoxysilane, die unerwünscht sind, entstehen. Das Verfahren hat des weiteren den Nachteil, daß der 1. Schritt sehr zeitaufwendig ist, da bedingt durch die Verfahrensweise zur Erzielung eines hohen Umesterungsgrades die Reaktionsmischung lediglich mit einer Aufheizrate von 0,1 bis 0,5 °C pro Minute erwärmt werden kann und zudem verhältnismäßig hohe Endtemperaturen notwendig sind. Ein weiterer Nachteil des Verfahrens besteht darin, daß die Umesterung in einem molaren Verhältnis von Tetramethoxy- oder Tetraethoxysilan zu den primären Alkoholen von vorzugsweise 1:4,2 bis 1:4,8 erfolgt und damit ein weiterer, aufgrund der hohen Siedepunkte aufwendiger destillativer Reinigungsschritt erforderlich ist.

Gegenstand der Erfindung ist ein Verfahren zur Herstellung von Alkoxysilanen mit 6 bis 38 Kohlenstoffatome aufweisenden Alkoxyresten durch Umesterung von Alkoxysilanen, deren Alkoxygruppen 1 bis 4 Kohlenstoffatome aufweisen, mit höheren linearen und/oder verzweigten Alkoholen mit 6 bis 38 Kohlenstoffatomen in Gegenwart von basischen oder sauren Katalysatoren bei einem Druck von 1 bis 800 hPa und einer Temperatur von 25 bis 150°C und unter ständiger Entfernung des entstehenden Alkohols mit 1 bis 4 Kohlenstoffatomen, wobei Druck und Temperatur bei der Umesterung so gewählt werden, daß der eingesetzte höhere Alkohol sowie die Silane nicht sieden.

Im Rahmen der vorliegenden Erfindung sollen unter der Bezeichnung "Silane" auch Gemische von Silanen und deren Teilhydrolysaten mit maximal 5 Siliciumatomen verstanden werden, wobei solche Teilhydrolysate vorzugsweise nicht oder nur in geringen Mengen, wie z.B. bis 10 Gewichtsprozent, bezogen auf das Silan, anwesend sind.

Bei den erfindungsgemäß eingesetzten Alkoxysilanen, deren Alkoxygruppen 1 bis 4 Kohlenstoffatome aufweisen, kann es sich um alle bisher bekannten Alkoxysilane handeln, wie Silane mit 1, 2, 3 oder 4 Si-gebundenen Alkoxygruppen, wobei Tetraalkoxysilane mit 1 bis 4 Kohlenstoffatome aufweisenden Alkoxygruppen bevorzugt und Tetramethoxysilan sowie Tetraethoxysilan besonders bevorzugt sind.

Bei den erfindungsgemäß eingesetzten Alkoxysilanen kann es sich um eine einzelne Art wie auch um ein Gemisch aus mindestens zwei Arten derartiger Alkoxysilane handeln.

Bei den erfindungsgemäß eingesetzten Alkoholen handelt es sich um lineare und/oder verzweigte Alkohole mit 6 bis 38 Kohlenstoffatomen, die aliphatisch gesättigt oder ungesättigt sein können.

Bevorzugt handelt es sich bei den erfindungsgemäß eingesetzten Alkoholen um aliphatisch gesättigte Alkohole mit 8 bis 20 Kohlenstoffatomen, wie 1-n-Octanol, 1-n-Decanol, 1-n-Dodecanol, 1-n-Tetradecanol und Gemische aus linearen und verzweigten Alkoholen mit 13 bis 15 Kohlenstoffatomen, wie z.B. solche käuflich erhältlich unter der Bezeichnung "C13-C15-Alkohol" bei der BASF AG, Ludwigshafen.

Bei den erfindungsgemäß eingesetzten höheren Alkoholen kann es sich um eine einzelne Art wie auch um ein Gemisch aus mindestens zwei Arten derartiger Alkohole handeln.

Bei dem erfindungsgemäßen Verfahren werden Alkoxysilane, deren Alkoxygruppen 1 bis 4 Kohlenstoffatome aufweisen, mit höheren Alkoholen mit 6 bis 38 Kohlenstoffatomen in molaren Mengen von vorzugsweise 1:4 bis 1:4,5, besonders bevorzugt bei 1:4, eingesetzt.

Als Katalysatoren können bei dem erfindungsgemäßen Verfahren basische und saure Katalysatoren eingesetzt werden, wobei basische Katalysatoren bevorzugt sind.

Beispiele für basische Katalysatoren sind homogene Katalysatoren, wie z.B. Alkalimetallhydroxide, wie Natriumhydroxid und Kaliumhydroxid, und Alkalimetallalkoholate, wie Natriummethylat, wobei Natriummethylat bevorzugt ist.

Beispiele für saure Katalysatoren sind homogene Katalysatoren, wie Salzsäure, Schwefelsäure und p-Toluolsulfonsäure, sowie heterogene Katalysatoren, wie feste saure Kationenaustauscher und feste säureaktivierte Bleicherden, wie z.B. solche vom Montmorillonit-Typ.

Die homogenen Katalysatoren werden in Mengen von vorzugsweise 0,01 bis 1,5 Gewichtsprozent, besonders bevorzugt von 0,05 bis 1 Gewichtsprozent, und die heterogenen Katalysatoren bevorzugt von 1 bis 20 Gewichtsprozent, besonders bevorzugt von 5 bis 15 Gewichtsprozent, bezogen auf eingesetztes Alkoxysilan mit 1 bis 4 Kohlenstoffatome aufweisenden Alkoxyresten, verwendet.

Das erfindungsgemäße Verfahren wird bei einer Temperatur von bevorzugt 30 bis 140°C, durchgeführt.

Das erfindungsgemäße Verfahren wird bei einem Druck von vorzugsweise 5 bis 300 hPa, durchgeführt.

Druck und Temperatur sind bei der erfindungsgemäßen Umesterung so zu wählen, daß der entstehende Alkohol mit 1 bis 4 Kohlenstoffatomen destillativ entfernt werden kann und der eingesetzte höhere Alkohol sowie die Silane nicht sieden. Es kann sich als vorteilig erweisen, gegen Ende der erfindungsgemäßen Umesterung den Druck kurzzeitig nochmals zu reduzieren, d.h. unter den bei der Umesterung gewählten Druck abzusenken, um Restanteile des bei der Umsetzung entstandenen Alkohols vollständig zu entfernen.

Werden bei dem erfindungsgemäßen Verfahren als Katalysatoren homogene saure und basische Katalysatoren eingesetzt, so werden diese nach erfolgter Umesterung vorzugsweise neutralisiert, und das entstehende Salz wird vorzugsweise durch Filtration entfernt. Die Neutralisation als solche ist seit langem bekannt, wobei selbstverständlich die gleichen sauren und basischen Verbindungen eingesetzt werden können, die oben jeweils auch als Katalysatoren aufgeführt wurden.

Werden bei dem erfindungsgemäßen Verfahren als Katalysatoren heterogene Katalysatoren eingesetzt, so werden diese nach erfolgter Umesterung - beispielsweise durch Filtration - von der Reaktionsmasse entfernt.

Bei dem erfindungsgemäßen Verfahren werden als Produkte hellfarbige, vorzugsweise farblose, Alkoxysilane mit 6 bis 38 Kohlenstoffatome aufweisenden Alkoxyresten erhalten.

Mit dem erfindungsgemäßen Verfahren wird ein Umesterungsgrad von vorzugsweise 95 bis 100%, besonders bevorzugt 98 bis 100%, erzielt.

Das erfindungsgemäße Verfahren hat den Vorteil, daß es sehr einfach in der Durchführung ist, wobei in einem Verfahrensschritt, in relativ kurzer Zeit und ohne weiteren Reinigungsschritt hellfarbige, vorzugsweise farblose, Produkte mit einem sehr hohen, vorzugsweise 100 %igen, Umesterungsgrad entstehen.

In den nachfolgenden Beispielen beziehen sich alle Angaben von Teilen und Prozentsätzen, soweit nichts anders angegeben ist, auf das Gewicht. Sofern nicht anders angegeben, werden die nachfolgenden Beispiele bei einem Druck der umgebenden Atmosphäre, also etwa bei 1000 hPa, und bei Raumtemperatur, also bei etwa 20°C bzw. bei einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

Die Bestimmung der Jodfarbzahl erfolgt nach DIN (Deutsche Industrie Norm) 6162. Die Jodfarbzahl ist ein Maß für den Verfärbungsgrad eines Produktes und ist die Menge an Jod in mg in 100 ml einer wäßrigen Lösung, deren Farbtiefe derjenigen des zu untersuchenden Produktes in gleicher Schichtdicke entspricht.

### Beispiel 1

179 g (0,96 Mol) 1-n-Dodecanol (käuflich erhältlich bei Merck-Schuchardt, Hohenbrunn), 50 g (0,24 Mol) Tetraethoxysilan (käuflich erhältlich unter der Bezeichnung "TES 28" bei der Wacker-Chemie GmbH, München) und 0,5 g einer 30 %igen Lösung von Natriummethylat in Methanol werden vermischt. Anschließend wird bei einem Druck von 160 hPa das Reaktionsgemisch innerhalb von 120 Minuten auf 130 °C erwärmt und gleichzeitig entstehender Ethylalkohol abdestilliert. Dann wird der Druck kurzzeitig auf 40 hPa zur Entfernung von Restanteilen Ethylalkohol erniedrigt, das Gemisch durch Zugabe von 0,5 g 20 %iger Salzsäure neutralisiert und das entstandene Natriumchlorid abfiltriert.
Es wird eine klare, farblose (Jodfarbzahl = 0) Flüssigkeit mit einer Viskosität von 27,5 mm²/s und einem HCl-Gehalt von 2,5 ppm erhalten. Nach ¹H-NMR-Untersuchungen weist das Produkt keine Si-Ethoxy-Gruppierungen und keinen freien Ethylalkohol mehr auf.

### Vergleichsbeispiel 1

Die Vorgehensweise von Beispiel 1 wird wiederholt, jedoch mit der Abänderung, daß bei der Reaktion entstehender Ethylalkohol beim Druck der umgebenden Atmosphäre, also bei etwa 1000 hPa, abdestilliert wird. Dazu muß das Reaktionsgemisch innerhalb von 6 Stunden auf 170 °C aufgeheizt werden. Dann wird durch Zugabe von 0,5 g 20 %iger Salzsäure neutralisiert und das entstandene Natriumchlorid abfiltriert.
Es wird eine klare Flüssigkeit mit einer Viskosität von 20,7 mm²/s, einem HCl-Gehalt von 0,5 ppm und einer Jodfarbzahl von 2 erhalten. Nach ¹H-NMR-Untersuchungen enthält das Produkt noch 13,2 Mol% Si-Ethoxy-Gruppierungen und 4,4 Mol% Ethanol.

### Beispiel 2

Die Vorgehensweise von Beispiel 1 wird wiederholt, jedoch mit der Abänderung, daß an Stelle von 179 g 1-Dodecanol 205,9 g (0,96 Mol) eines Gemisches bestehend aus linearen und verzweigten primären C13-C15-Alkoholen (käuflich erhältlich unter der Bezeichnung "C13-C15-Alkohol" bei der BASF AG, Ludwigshafen) eingesetzt werden.
Es wird eine klare, farblose (Jodfarbzahl = 0) Flüssigkeit mit einer Viskosität von 37,3 mm²/s und einem HCl-Gehalt von 3 ppm erhalten. Nach ¹H-NMR-Untersuchungeh weist das Produkt keine Si-Ethoxy-Gruppierungen und keinen freien Ethylalkohol mehr auf.

### Vergleichsbeispiel 2

Die Vorgehensweise von Beispiel 2 wird wiederholt, jedoch mit der Abänderung, daß bei der Reaktion entstehender Ethylalkohol beim Druck der umgebenden Atmosphäre, also bei etwa 1000 hPa, abdestilliert wird. Dazu muß das Reaktionsgemisch innerhalb von 6 Stunden auf 160 °C aufgeheizt werden. Dann wird der Druck kurzzeitig auf 40 hPa zur Entfernung von Restanteilen Ethylalkohol erniedrigt, das Gemisch durch Zugabe von 0,5 g 2 %iger Salzsäure neutralisiert und das entstandene Natriumchlorid abfiltriert.
Es wird eine klare Flüssigkeit mit einer Viskosität von 36,1 mm²/s, einem HCl-Gehalt von 3 ppm und einer Jodfarbzahl von 1 erhalten. Nach ¹H-NMR-Untersuchungen enthält das Produkt noch circa 0,2 Mol% Si-Ethoxy-Gruppierungen.

## Patentansprüche

1. Verfahren zur Herstellung von Alkoxysilanen mit 6 bis 38 Kohlenstoffatome aufweisenden Alkoxyresten durch Umesterung von Alkoxysilanen, deren Alkoxygruppen 1 bis 4 Kohlenstoffatome aufweisen, mit höheren linearen und/oder verzweigten Alkoholen mit 6 bis 38 Kohlenstoffatomen in Gegenwart von basischen oder sauren Katalysatoren bei einem Druck von 1 bis 800 hPa und einer Temperatur von 25 bis 150°C und unter ständiger Entfernung des entstehenden Alkohols mit 1 bis 4 Kohlenstoffatomen, wobei Druck und Temperatur bei der Umesterung so gewählt werden, daß der eingesetzte höhere Alkohol sowie die Silane nicht sieden.

2. Verfahren nach Anspruch 1, dadurch gekennzeichnet, daß es sich bei den eingesetzten Alkoxysilanen um Tetraalkoxysilane mit 1 bis 4 Kohlenstoffatome aufweisenden Alkoxygruppen handelt.

3. Verfahren nach Anspruch 1 oder 2, dadurch gekennzeichnet, daß es sich bei den eingesetzten Alkoxysilanen um Tetramethoxysilan und/oder Tetraethoxysilan handelt.

4. Verfahren nach einem oder mehreren der Ansprüche 1 bis 3, dadurch gekennzeichnet, daß es sich bei den eingesetzten Alkoholen um aliphatisch gesättigte Alkohole mit 8 bis 20 Kohlenstoffatomen handelt.

5. Verfahren nach einem oder mehreren der Ansprüche 1 bis 4, dadurch gekennzeichnet, daß Alkoxysilane, deren Alkoxygruppen 1 bis 4 Kohlenstoffatome aufweisen, mit höheren Alkoholen mit 6 bis 38 Kohlenstoffatomen in molaren Mengen von 1:4 bis 1:4,5 eingesetzt werden.

6. Verfahren nach einem oder mehreren der Ansprüche 1 bis 5, dadurch gekennzeichnet, daß als Katalysatoren basische und saure Katalysatoren eingesetzt werden.

7. Verfahren nach einem oder mehreren der Ansprüche 1 bis 6, dadurch gekennzeichnet, daß basische Katalysatoren eingesetzt werden.

8. Verfahren nach einem oder mehreren der Ansprüche 1 bis 7, dadurch gekennzeichnet, daß es bei einer Temperatur von 30 bis 140°C durchgeführt wird.

9. Verfahren nach einem oder mehreren der Ansprüche 1 bis 8, dadurch gekennzeichnet, daß es bei einem Druck von 5 bis 300 hPa durchgeführt wird.

## Claims

1. Process for the preparation of alkoxysilanes having alkoxy radicals containing 6 to 38 carbon atoms by transesterification of alkoxysilanes whose alkoxy groups contain 1 to 4 carbon atoms with linear and/or branched higher alcohols containing 6 to 38 carbon atoms in the presence of basic or acid catalysts under a pressure of 1 to 800 hPa and at a temperature of 25 to 150°C with continuous removal of the resulting alcohol containing 1 to 4 carbon atoms, the pressure and temperature during the transesterification being selected such that the higher alcohol employed and the silanes do not boil.

2. Process according to Claim 1, characterized in that the alkoxysilanes employed are tetraalkoxysilanes having alkoxy groups containing 1 to 4 carbon atoms.

3. Process according to Claim 1 or 2, characterized in that the alkoxysilanes employed are tetramethoxysilane and/or tetraethoxysilane.

4. Process according to one or more of Claims 1 to 3, characterized in that the alcohols employed are aliphatically saturated alcohols containing 8 to 20 carbon atoms.

5. Process according to one or more of Claims 1 to 4, characterized in that alkoxysilanes whose alkoxy groups contain 1 to 4 carbon atoms are employed together with higher alcohols containing 6 to 38 carbon atoms in molar quantities of 1:4 to 1:4.5.

6. Process according to one or more of Claims 1 to 5, characterized in that basic and acid catalysts are employed as the catalysts.

7. Process according to one or more of Claims 1 to 6, characterized in that basic catalysts are employed.

8. Process according to one or more of Claims 1 to 7, characterized in that it is carried out at a temperature of 30 to 140°C.

9. Process according to one or more of Claims 1 to 8, characterized in that it is carried out under a pressure of 5 to 300 hPa.

## Revendications

1. Procédé de préparation d'alcoxysilanes ayant des radicaux alcoxy renfermant de 6 à 38 atomes de carbone par estérification d'alcoxysilanes, dont les groupes alcoxy referment de 1 à 4 atomes de carbone, avec des alcools supérieurs linéaires et/ou ramifiés ayant de 6 à 38 atomes de carbone, en présence de catalyseurs acides ou basiques à une pression de 1 à 800 hPa et une température de 25 à 150°C et en éliminant continuellement l'alcool formé ayant de 1 à 4 atomes de carbone, la pression et la température lors de l'estérification étant choisies de telle sorte que l'alcool supérieur utilisé ainsi que les silanes ne soient pas à ébullition.

2. Procédé selon la revendication 1, caractérisé en ce que les alcoxysilanes utilisés sont des tréta-alcoxysilanes ayant des groupes alcoxy renfermant de 1 à 4 atomes de carbone.

3. Procédé selon la revendication 1 ou 2, caractérisé en ce que les alcoxysilanes utilisés sont le tétraméthoxysilane et/ou le tétraéthoxysilane.

4. Procédé selon l'une ou plusieurs des revendications 1 à 3, caractérisé en ce que les alcools utilisés sont des alcools aliphatiquement saturés ayant de 8 à 20 atomes de carbone.

5. Procédé selon l'une ou plusieurs des revendications 1 à 4, caractérisé en ce que l'on utilise des alcoxysilanes dont les groupes alcoxy renferment de 1 à 4 atomes de carbone, avec des alcools supérieurs ayant de 6 à 38 atomes de carbone, en quantités molaires de 1:4 à 1:4,5.

6. Procédé selon l'une ou plusieurs des revendications 1 à 5, caractérisé en ce que les catalyseurs utilisés sont des catalyseurs basiques et acides.

7. Procédé selon l'une ou plusieurs des revendications 1 à 6, caractérisé en ce que l'on utilise des catalyseurs basiques.

8. Procédé selon l'une ou plusieurs des revendications 1 à 7, caractérisé en ce qu'il est réalisé à une température de 30 à 140°C.

9. Procédé selon l'une ou plusieurs des revendications 1 à 8, caractérisé en ce qu'il est réalisé à une pression de 5 à 300 hPa.
